# EUROPÄISCHE PATENTANMELDUNG

(11) **EP 1 704 802 A1**
(43) Veröffentlichungstag der Anmeldung: **27.09.2006**
(21) Anmeldenummer: 06400015.1
(22) Anmeldetag: 17.03.2006
(51) Int. Cl.: A47J 27/00, F24C 15/10

(54) **System zur Zubereitung von Speisen**

(30) Priorität: 22.03.2005 DE 202005004942 U
(71) Anmelder: Becker, Ralf, 71672 Marbach am Neckar (DE); Kaupp, Klaus, 72178 Waldachtal (DE); Trapp, Thomas, 70193 Stuttgart (DE); Vaca Torres, Alejandro, 71634 Ludwigsburg (DE)
(72) Erfinder: Becker, Ralf, 71672 Marbach am Neckar (DE); Kaupp, Klaus, 72178 Waldachtal (DE); Trapp, Thomas, 70193 Stuttgart (DE); Vaca Torres, Alejandro, 71634 Ludwigsburg (DE)

(57) **Zusammenfassung**

Zubereitungssystem für Speisen aufweisend:
a) eine Arbeitsfläche (20)
b) zumindest ein Verbindungselement (1), das so in der Arbeitsfläche (20) angeordnet ist, dass es von einer Arbeitsposition in eine Nichtgebrauchsposition in die Arbeitsfläche versenkt werden kann;
c) wobei das zumindest eine Verbindungselement (1) in seiner Arbeitsposition eine Energieversorgung für eine lösbar mit dem Verbindungselement verbindbare Systemgerätschaft bereitstellt, mit der die Speisen zubereitet werden.

Das Verbindungselement umfasst vorzugsweise einen Anschluss (3) zum Absaugen von bei der Zubereitung von Speisen anfallenden Dämpfen und / oder zum Kühlen der auf dem Verbindungselement angeordneten Systemgerätschaft.

## Beschreibung

### 1. Betreff

Die Erfindung betrifft ein System zur Zubereitung von Speisen.

### 2. Stand der Technik

Alle bisherigen Systeme, wie z.B. Gasherd, Elektroherd oder Elektroherd mit CeranKochfeld, beanspruchen einen ihnen eindeutig zugewiesenen Raum, der normalerweise nicht anderweitig, z.B. zum Gemüse schneiden, Fleisch ausnehmen oder für andere generelle vorbereitende Tätigkeiten, genutzt werden kann.
Während bei Elektro- und Gasherd die anderweitige Nutzung durch die "topographischen" Eigenschaften des jeweiligen Systems, also konstruktions- und verfahrensbedingte Unebenheiten und Öffnungen, beschränkt wird, lässt sich selbst die glatte Ceranoberfläche nur bedingt als Arbeitsfläche nutzen, da entweder eine Beschädigung durch Verkratzen vermieden werden soll, oder aber ein Kochfeld bereits in Betrieb genommen worden ist, so dass auf Grund des begrenzten verbleibenden Platzes das Ceranfeld nicht mehr für eine Nutzung in Frage kommt, da im Zuge der Benutzung eines Feldes wegen der dort entstehenden Hitze ein Sicherheitsabstand eingehalten werden sollte.

Im Fall des Elektro- und des Gasherdes mit den erwähnten Unebenheiten ergibt sich zudem ein Reinigungsproblem. Dieses ergibt sich selbst im Fall einiger Kochsysteme mit Ceranfläche üblicherweise auch am Begrenzungsrand des Kochfeldes.
Neben zahlreicher weiterer Ansätze wird beim Küchenfunktionsblock in DE 102 35 774 A1 die Versenkbarkeit einzelner in den Block integrierter Module vorgesehen, zum einen aus dem Grund der einfacheren Reinigung, zum anderen aus Gründen einer klaren, reduzierten und eleganten Gestaltung.

Neben dem beschriebenen Flächenbedarf wird die im Falle des Elektroherdes (sowohl in der Version mit erhabenen Kochplatten als auch in der Version des Ceranfeldes) fest vorgegebene Größe der jeweiligen Wärmeübertragungsfläche (Herdplatte oder Heizspule, bei einigen Ceranfeldern allerdings zumindest in Stufen variierbar) als nachteilig angesehen, da unterschiedlich große Kochgefäße (Töpfe, Pfannen usw.) nur auf bestimmten Feldern eine optimale Energiezufuhr erhalten - sind sie größer, werden äußere Bereiche nur indirekt beheizt, sind sie kleiner, wird Energie verschwendet.

Bisherige Lösungen lassen sinnvollerweise nur mehr oder minder zylindrische Bauformen des jeweiligen Kochgefäßes (zumindest der Grundfläche) zu - auch wenn zubereitungstechnisch (z.B. Form und Größe des jeweiligen Lebensmittels, Rezept-Vorgehensweise, Handhabung einfacher usw.) eine andere Bauform sinnvoller wäre.

Gleichzeitig schränkt die Anordnung der Heizflächen innerhalb eines definierten Kochfeldes, welches zudem an sich nur in begrenzten Ausführungen erhältlich ist, die Gestaltungsmöglichkeit des gesamten Küchenraumes ein.

Der zuvor beschriebene Nachteil der Anforderung der weitestgehenden Übereinstimmung der Kochgefäßbodengeometrie mit der Geometrie der Heizfläche wird durch die relativ hohen Anforderungen an die Ebenheit sowohl des Kochgefäßbodens als auch der Heizfläche verstärkt. Alle vorhandenen Unebenheiten in der Kontaktzone bzw. fehlende Überlappung zwischen Kochgefäßboden und Heizfläche führen letztendlich zu unnötigen Energieverlusten durch isolierende Luftpolster.

Die Integration der Heizquelle (Heizspirale) in die dafür vorgesehene Kochzone führt dazu, dass die Kochzone bezüglich ihrer Materialität festgelegt ist. Eine integrierte Verwendung der Kochstelle in anderen Arbeitsflächen ist konstruktiv bedingt nicht möglich. Lediglich ein Cerankochfeld kann in unterschiedliche Arbeitsflächen eingepasst werden - allerdings bleibt die Materialität des Ceranfeldes an sich natürlich unverändert - was zu begrenzten gestalterischen Freiräumen führt.

Bei den bisher angesprochenen Systemen wird die Hitze zum Erwärmen der Speisen ausschließlich durch den Boden des Kochgefäßes übertragen, der sich dabei so stark erwärmt, dass ein unmittelbares Abstellen des Kochgefäßes nach dem Zubereitungsvorgang nicht auf allen Oberflächen ohne Gefahr einer Beschädigung selbiger, z.B. durch Verbrennungen, möglich ist; zumindest werden zusätzliche, thermisch isolierende Untersetzer benötigt.
Auch die Kochflächen sind nach dem Zubereitungsvorgang stark erwärmt bzw. erhitzt und immer wieder Ursache für Unfälle durch Verbrennungen im Haushalt. Lediglich bei induktiven Verfahren findet die Abkühlung der Kochflächen nach Wegnahme des Kochgefäßes deutlich schneller statt, da die Kochfläche selbst nur durch den induktiv erhitzten Boden des Kochgefäßes erwärmt wird.

Die Geruchentwicklung während des Zubereitungsvorganges wird üblicherweise durch Absaugungen, die über oder/und neben dem Kochfeld angeordnet sind, in Grenzen gehalten. Fast alle auf dem Markt erhältlichen Verfahren müssen dabei relativ große Distanzen zwischen Kochgefäß-Öffnung und Ansaugöffnung, also zwischen Ursprung des Wrasens und dem Eingang in die Absaugung, überwinden, da eine Bedienung der Kochgefäße durch den Nutzer normalerweise jederzeit möglich sein sollte.
Einige bekannte Verfahren (z.B. Muldenlüftung mit Direktlüftungs-System VL 051 von Firma Gaggenau Hausgeräte GmbH) saugen den Wrasen aus höhenverstellbaren Öffnungen seitlich des Kochfeldes ab. Auch bei diesen so genannten Muldenlüftungen sind jedoch größere Distanzen zu überwinden (mindestens Kochgefäßhöhe oder -breite), der Vorteil gegenüber Haubenabsaugungen besteht in der Integration in den Kochfeldträger, so dass eine freie Positionierung des Kochfeldes im Raum möglich ist. Als Folge der zu überwindenden Distanz ergeben sich relativ starke Strömungen, die u.a. auch mit einer starken Geräuschentwicklung verbunden sind.
Eines der vorhandenen Systeme (DE 102 16 012 A1), welches seitlich neben bzw. hinter dem Kochfeld absaugt, verwendet sogar ein auf der Stirnseite angebrachtes Gebläse, um den Wrasen in Richtung der Absaugöffnung zu drücken.
Neben der z.T. starken Geräuschentwicklung und der subjektiv als störend empfundenen Strömungsgeschwindigkeit beim Eingriff in den Kochprozess (Umrühren, Einfüllen usw.) kann der für die Überbrückung der Distanz zwischen Kochgefäß-Öffnung und Absaugungseingang erhöhte Energieaufwand als Nachteil angesehen werden. Dies trifft auch für Muldenlüftungen zu.
Eine Lösung (DE 201 04 598 U1) bietet dafür eine höhenverstellbare Absaugung an. Im Falle unterschiedlich hoher Kochgefäße kann diese Lösung allerdings eine effiziente Absaugung für alle diese Gefäße ebenfalls nur durch erhöhte Absaugleistung garantieren. Zudem wird der Platzverbrauch des Verstellmechanismus als nachteilig angesehen.

Dem eingangs beschriebenen fest montierten Kochfeld stehen diverse mobile elektrische Kochgeräte gegenüber, die aber ihrerseits in ihren Nutzungsmöglichkeiten stark eingeschränkt sind. Zumeist sind sie nur für spezifische Koch- und Erhitzungsvorgänge geeignet, z.B. Reiskocher, Eierkocher oder Toaster. Während sie natürlich eigentlich nahezu beliebig im Raum angeordnet werden können, erfährt diese prinzipielle Freiheit ihre Einschränkung durch die Notwendigkeit, die Energie aus einer möglichst nahe gelegenen Steckdose zu beziehen. Je länger die angeschlossenen Kabel bzw. Verlängerungskabel sein müssen, desto mehr kehrt sich die zunächst als Vorteil wahrgenommene Bewegungsfreiheit in einen Nachteil durch die Schwierigkeit der Kabelhandhabung um.
Dies gilt auch für ein Kochsystem (DE 201 17 517 U1), welches variable Kochgefäße mit integrierter Heizplatte vorsieht, welche über den Verbindungsstecker einer Konsole mit Strom versorgt werden.

Ein weiteres Kochsystem (Offenlegungsschrift 1 950 235) bietet zumindest eine Lösung an, bei der beliebige Kochgeräte mit integrierter Heizplatte entlang einer Kontaktleiste angeordnet werden können, so dass ihre Anzahl nur durch die Länge der Arbeitsfläche, entlang derer die Kontaktleiste montiert ist, begrenzt ist. Auch die Form und Größe des jeweiligen Kochgerätes ist damit frei wählbar. Als nachteilig wird hier die Begrenzung der freien Anordnung in nur einer Richtung, nämlich parallel zur Kontaktleiste, gesehen. Außerdem lässt sich die Kontaktleiste nur begrenzt bei Nichtgebrauch abdecken, was zu Einschränkungen bei der Gestaltung des Arbeitsplatzes führt.

### 3. Zielsetzung

Der Erfindung liegt die Aufgabe zugrunde, die beschriebenen Nachteile zu vermeiden. Im Einzelnen soll ein System angeboten werden, dass dem Benutzer gestattet, die Anordnung einzelner Komponenten des Systems weitgehend selbstbestimmt vorzunehmen. Die einzelnen Komponenten sollen sich in frei wählbare Arbeitsflächen integrieren lassen, so dass bei Nichtgebrauch des Systems die betreffende Fläche ohne Einbußen anderweitig nutzbar ist (Anspruch 1).
Trotz dieser Gestaltungsfreiheit soll das System eine Geruchsabsaugung beinhalten, die so in die Systemkomponenten integriert ist, dass eine zusätzliche Absaugungseinrichtung über, neben oder auf der Arbeitsfläche nicht benötigt wird (Anspruch 2).

### 4. Merkmale eigene Lösung

Das hier vorgestellte System zur Zubereitung von Speisen erlaubt die Wahl der Anordnung von elektrischen Energieübertragungselementen (im Folgenden auch "Verbindungselemente" genannt) in beliebig wählbaren Arbeitsflächen. Die Energieübertragungselemte dienen zur Energieversorgung verschiedenster Systemgerätschaften zur Zubereitung von Speisen (im Folgenden nur "Systemgerätschaften" genannt), welche ein integriertes Heizelement besitzen. Diese Systemgerätschaften lassen sich auf die Verbindungselemente aufstecken, ähnlich der auf dem Markt erhältlichen elektrischen Wasserkocher. Im Unterschied zu diesen lassen sich die hier vorgestellten Energieübertragungselemente bei Nichtbenutzung in die Arbeitsfläche versenken, wobei ihre Kopffläche bündig mit der umgebenden Arbeitsoberfläche abschließt. Somit können mehr als - bei "normalen" Kochfeldern üblich - vier Kochstellen vorgesehen werden, da sich wegen der Versenkbarkeit in die Arbeitsfläche selbige bei Nichtgebrauch der "Kochstellen" ohne Einschränkungen für andere Tätigkeiten verwenden lässt. Denkbar ist z.B. die Integration der Verbindungselemente und damit der "Kochstellen" in den vorhandenen Esstisch, welcher dann auch jederzeit anderweitig einsetzbar ist, z.B. als Arbeitstisch.
Durch die Integration eines Heizelementes in die Systemgerätschaften ist keine festgelegte Zuordnung eines Verbindungselementes (also einer "Kochstelle") zu einer bestimmten Systemgerätschaft notwendig. Vielmehr kann jede Systemgerätschaft auf ein beliebiges Verbindungselement gesteckt werden, um ihre elektrische Energie zu beziehen.
Da an Stelle von Heizplatten bzw. eines Kochfeldes nur noch die Verbindungselemente den Ort der Zubereitung definieren und sich um diese herum eine frei wählbare Arbeitsoberfläche ausbreitet, die nicht unbedingt eine herkömmlichen Kochplatten bzw. Kochfeldern entsprechende thermische Stabilität besitzen muss, ist eine thermische Isolierung der Systemgerätschaften mindestens zur Kontaktfläche mit der Arbeitsoberfläche angebracht. Dies kann durch einen mehrteiligen Aufbau, z.B. durch Trennung zwischen einem Innengefäß zur Aufnahme der Speise und einem Außengefäß, welches seinerseits das Innengefäß und das Heizelement aufnimmt, gelöst werden.
Somit kann die Systemgerätschaft auch an jeder weiteren beliebigen Stelle der Arbeitsfläche abgestellt werden, ohne diese, z.B. durch Verbrennungen, zu beschädigen. Auf zusätzliche thermisch isolierende Untersetzer zum Schutze der Arbeitsfläche kann somit verzichtet werden.
Somit besteht auch keine Gefahr, dass überlaufende oder auf die Arbeitsfläche verschüttete Speisen dort oder an der Systemgerätschaft anbrennen. Durch die interne Isolierung ist diese Gefahr völlig ausgeschlossen, was einen Vorteil auch gegenüber Induktionssystemen darstellt, bei denen zumindest der Boden des Kochgefäßes stark erhitzt ist.

Die freie Anordnung der vorhandenen Verbindungselemente und damit der eigentlichen Kochstellen wird ergänzt durch die Möglichkeit, auch die Bedienelemente zum Einstellen der Heizleistung der jeweiligen Systemgerätschaft frei anzuordnen. Für das hier vorgestellte System sind mehrere Konfigurationen denkbar:
neben der variabelsten Möglichkeit, die Steuerung und Regelung der einzelnen Kochstellen mit Hilfe einer Fernbedienung vorzunehmen, ist es auch denkbar, dass die Bedienelemente an beliebiger Stelle in dieselbe Arbeitsfläche integriert sind, in der die Verbindungselemente eingelassen sind. Weiterhin denkbar ist, dass jede Systemgerätschaft ihr eigenes Bedienelement zur Steuerung und Regelung beinhaltet.

Weiterhin lässt sich durch geeignete Formgebung der Verbindungselemente eine eindeutige Positionierung der Systemgerätschaften auf den Verbindungselementen sicherstellen, so dass die Ausrichtung der jeweiligen Systemgerätschaft im Sinne einer Rotation um die eigene Mittelachse zur Regelung der Energiezufuhr verwendet werden kann.

Durch die Vernetzung der Systemgerätschaften über die Verbindungselemente mit der Energieversorgung, der Steuerungs- und Regelungseinrichtung und dem Absaugsystem ist auch die Integration eines Messkreislaufes möglich, über den Parameter, die die zuzubereitende Speise beeinflussen (z.B. Temperatur, Feuchtigkeit), erfasst und an die Steuerungs- und Regelungseinheit weitergegeben werden, welche die Energiezufuhr und Absaugleistung manipulieren. Für gewisse Standardkochvorgänge (z.B. Kochen von Reis oder Kartoffeln) ist somit eine teilautomatische Zubereitung möglich.

Die bereits von marktgängigen mobilen elektrischen Kochgeräten bekannte Verwendung eines Verbindungselementes zur Übertragung elektrischer Energie erfährt nicht nur durch die Versenkbarkeit des Verbindungselementes eine Erweiterung und Verbesserung, sondern auch durch die zusätzliche Integration eines Absaugsystems.
In jeder Systemgerätschaft sind hierbei Absaugkanäle bzw. als Absaugkanäle dienende Zwischenräume vorhanden, welche mit dem Absaugsystem über das Verbindungselement zusammengeschlossen werden.
Die Ansaugöffnungen befinden sich hierbei in unmittelbarer Nähe der Öffnung der jeweiligen Systemgerätschaft, so dass der beim Zubereiten der Speisen entstehende Wrasen unmittelbar abgesaugt werden kann, ohne dass größere Distanzen überbrückt werden müssen.
Während die normale Absaugleistung so ausgelegt ist, dass sie für alle üblichen bei der Zubereitung der Speisen auftretenden Wrasen-Volumenströme ausreichend ist, kann sie bei Bedarf in solchem Maße gesteigert werden, dass eine Abkühlung der Gerätschaft und damit auch der enthaltenen Speise möglich ist, wenn zusätzlich auch die Wärmezufuhr abgestellt wird.
Dieser Abkühlvorgang kann bei Bedarf noch durch eine Vergrößerung des Abstandes zwischen Heizquelle und dem die Speise beinhaltenden Bereich der Systemgerätschaft beschleunigt werden.
Für die Steuerung und Regelung der Absaugleistung gelten die gleichen Möglichkeiten wie für die Energiezufuhr. Die Regelung der Energiezufuhr ist vorzugsweise getrennt von der Regelung der Absaugleistung einstellbar.

Größere Systemgerätschaften oder solche mit erhöhter Leistungsaufnahme oder größerer benötigter Absaugleistung können mehrere Aufnahmen für größerer benötigter Absaugleistung können mehrere Aufnahmen für Verbindungselemente enthalten. Um trotz freier Anordnung der Verbindungselemente auf der Arbeitsfläche mehrere Verbindungselemente passend zu den Aufnahmen in den Systemgerätschaften auszurichten, können einige benachbarte Verbindungselemente exzentrisch in drehbar in die Arbeitsfläche eingelassenen Kreisflächen eingebaut sein. Diese Kreisflächen sind vorzugsweise in der gleichen Materialität wie die Arbeitsfläche ausgeführt.

### 5. Bauelemente eigene Lösung

Das Kochsystem kann in vier Subsysteme gegliedert werden:
a) Systemgerätschaften
b) Verbindungselemente (& Arbeitsfläche, in die diese integriert werden können)
c) Bedienelemente
d) Energieversorgung, Steuerungs-/Regelungseinheit und Absaugungseinrichtung

Die einzelnen prinzipiell benötigten Elemente dieser Untergruppen sollen im Folgenden in ihren möglichen generellen Ausprägungen beschrieben werden:

### a) Systemgerätschaften

Als Systemgerätschaften kommen alle Gerätschaften in Betracht, die zur Zubereitung von Speisen verwendet werden können, insbesondere solche, die zur Erfüllung ihrer Funktion elektrische Energie benötigen, z.B. Kaffeemaschine, Toaster, Ofen, vertikaler (z.B. Döner-Grill) oder horizontaler Grill, universale Küchenmaschinen, Mixer uvm.
Fallen bei der Zubereitung der Speisen Dämpfe und Gase an, z.B. durch Erhitzen, welche in der weiteren Umgebung des Zubereitungsplatzes unerwünscht sind, da sie z.B. Fetttröpfchen enthalten oder mit Gerüchen behaftet sind, so sind die Systemgerätschaften vorzugsweise so ausgebildet, dass sie integrierte Absaugkanäle bzw. als Absaugkanäle benutzte Zwischenräume aufweisen. Die gesamte Systemgerätschaft kann zur Erfüllung dieser Funktion doppelwandig ausgeführt sein, d.h. die Absaugkanäle bzw. Zwischenräume sind während des Herstellungsprozesses untrennbar integriert worden. Alternativ kann die Systemgerätschaft auch mehrteilig aufgebaut sein, z.B. mit Innengefäß zur Aufnahme der Speise und Außengefäß zur Aufnahme der Heizspirale und des Innengefäßes. Eine entsprechende Konturierung beider Gefäße könnte beim Zusammenbau die gewünschten lassen sich Innen- und Außengefäß wieder demontieren. Dies erlaubt für gewisse Zubereitungsaufgaben auch das bloße Austauschen des Innengefäßes bei Beibehaltung des Außengefäßes, so dass die Anzahl anzuschaffender Systemgerätschaften mit Heizspiralen reduziert werden kann. Ein Beispieleinsatzfall wäre z.B. die Verwendung eines Dünsteinsatzes im Austausch gegen ein einfaches Kochgefäß.
Das Außengefäß kann soweit reduziert werden, dass es einer Klammer ähnlich lediglich Heizelement, Absaugkanäle und -öffnungen beherbergt und das Innengefäß an wenigen Stellen umfasst.
Die Formgebung der Absaugkanäle sollte optimalerweise so erfolgen, dass im Wrasen enthaltene Fetttröpfchen größtenteils bereits in diesen abgefangen werden, noch bevor sie durch das Verbindungselement in das Absaugungssystem gelangen.
Alle Systemgerätschaften besitzen eine Aufnahme für das in b) beschriebene Verbindungselement. Diese Aufnahme beinhaltet den Gegenkontakt zum Verbindungselement, um die benötigte elektrische Energie für das Heizelement zu beziehen. Bei Systemgerätschaften mit Absaugungsfunktion beinhaltet die Aufnahme auch die Öffnung zum Absaugungskanal, welche so ausgebildet ist, dass sie beim Aufsetzen der Systemgerätschaft auf das Verbindungselement mit der Absaugöffnung des Verbindungselementes in Deckung kommt.

### b) Verbindungselemente (& Arbeitsfläche, in die diese integriert werden können)

Das Verbindungselement führt der auf es aufgesetzten Systemgerätschaft die zur Zubereitung der Speisen benötigte Energie zu. Für Systemgerätschaften mit Absaugungsfunktion stellt es außerdem die Verbindung her zwischen den Absaugkanälen / den als Absaugkanälen dienenden Zwischenräumen der Systemgerätschaft und der Absaugungseinrichtung, welche entfernt von den Verbindungselementen aufgestellt sein kann und über Absaugungsleitungen mit diesen verbunden ist.
Befinden sich Bedienelemente an der Systemgerätschaft selbst, so enthält das Verbindungselement auch die notwendigen Kontakte zur Übermittlung der Steuerungs- und Regelungssignale an die Steuerungs- und Regelungseinheit.
Für den Fall des automatischen, programmierten Zubereitens von Speisen werden über diese Kontakte auch die von Sensoren erzeugten Signale der zu messenden Parameter (z.B. Temperatur und Feuchtigkeit der Speise) an die Steuerungs- und Regelungseinheit übertragen.
Das Verbindungselement ist so ausgebildet, dass es in Arbeitsflächen mit beliebiger Materialität eingebaut werden kann. Es ist so aufgebaut, dass es einen in der Arbeitsfläche fest zu fixierenden Teil besitzt und einen relativ dazu beweglichen Teil.

Arbeitsfläche fest zu fixierenden Teil besitzt und einen relativ dazu beweglichen Teil. Letzterer stellt das Element dar, auf welches die Systemgerätschaft gesteckt wird, um die Verbindung zur Energieversorgung, zum Absaugungssystem und gegebenenfalls zur Steuerungs- und Regelungseinrichtung herzustellen.
Kopfseitig schließt das Verbindungselement mit einer Blende ab, welche die gleiche Materialität wie die umgebende Arbeitsfläche besitzen kann. Die Blende schließt beim Versenken des Verbindungselementes bündig mit der umgebenden Arbeitsfläche ab.
Das Aus- bzw. Einfahren des Verbindungselementes kann auf unterschiedliche Weise erfolgen, wie z.B. manuell durch eine sogenannte "Push-Push"-Mechanik oder auch automatisch mittels Motorantrieb.

### c) Bedienelemente

Die Bedienelemente, mit denen der Benutzer die Steuerung und Regelung des Zubereitungsprozesses vornimmt, können in verschiedensten auf dem Markt bereits verwendeten Ausprägungen vorliegen. Im Unterschied zu herkömmlichen auf dem Markt erhältlichen Kochsystemen sind sie allerdings vorzugsweise frei anzuordnen, so dass jeder Benutzer sie der Anordnung seiner Verbindungselemente entsprechend anpassen kann.
Denkbar ist auch die Benutzung einer Fernbedienung.
Die Verwendung des oben beschriebenen Verbindungselementes gestattet darüber hinaus, die Systemgerätschaft selbst zur Steuerung und Regelung zu verwenden, indem z.B. die Verdrehung auf oder mit dem Verbindungselement gemessen und als Steuerungssignal verwendet wird.

### d) Energieversorgung, Steuerungs-/Regelungseinheit und Absaugungseinrichtung

Je nach Einbaulage der Arbeitsfläche, in die die Verbindungselemente integriert sind, kann ausgewählt werden, ob Energieversorgung, Steuerungseinheit und Absaugungseinrichtung unmittelbar unterhalb der Arbeitsfläche angeordnet oder über eine oder mehrere Zuleitungen damit verbunden sind. Im Einzelfall entscheiden schließlich die baulichen Gegebenheiten darüber, ob z.B. die Absaugung als Umluftsystem ausgelegt werden muss oder ob sie als Abluftsystem ausgelegt werden kann.

Die Energieversorgung stellt die elektrische Energie bereit, die über die Verbindungselemente an die Systemgerätschaften weitergeleitet wird. Sie ist entweder Anzahl nicht überschritten werden kann oder aber modular erweiterbar und somit individuell an die gewünschte Anzahl an Kochstellen anpassbar.

Die Steuerungs-/Regelungseinheit steht mit Ausnahme des Falles, dass jede Systemgerätschaft eine integrierte Steuerungs- und Regelungseinheit mitsamt des zugehörigen Bedienelementes bzw. der zugehörigen Bedienelemente besitzt, mit der Energieversorgung und der Absaugungseinrichtung in Verbindung und regelt je nach Eingabe an den Bedienelementen Energiezufuhr und Absaugleistung an den zugehörigen Verbindungselementen und damit den dort aufgesetzten Systemgerätschaften.

Die Absaugungseinrichtung steht über die Verbindungselemente mit den Absaugkanälen bzw. den als Absaugkanälen dienenden Zwischenräumen der Systemgerätschaften in Verbindung. Sie ist in solcher Weise auszulegen, dass sie auch größere Feuchtigkeitsanteile der angesaugten Luft verarbeiten kann, z.B. durch die Verwendung von Technologien, welche von handelsüblichen Waschsaugern her bekannt sind. Ebenso werden dem Stand der Technik angemessene Fettabscheider und Geruchsfilter verwendet.

### 6. Detailbeschreibung (Funktion)

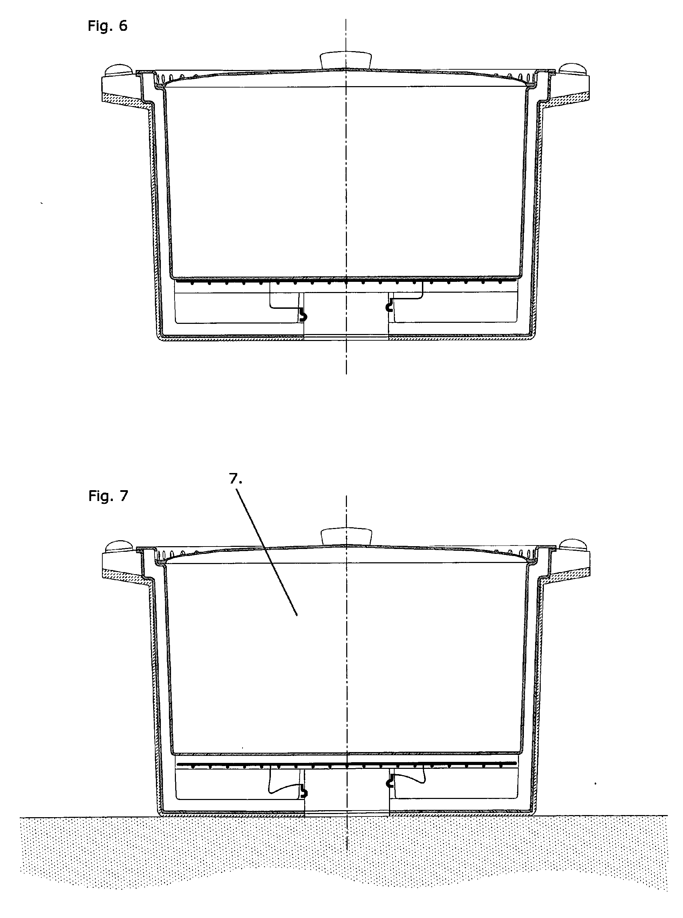

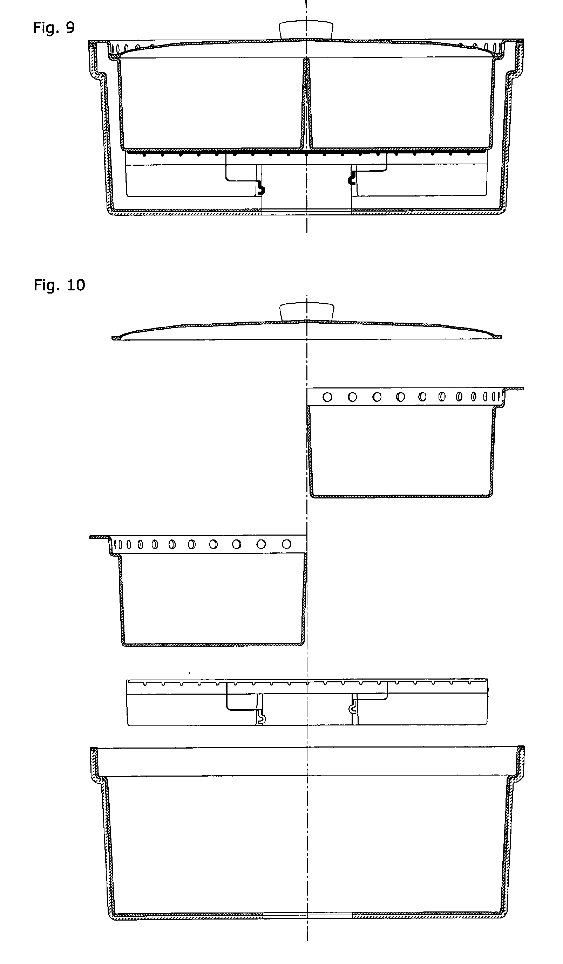

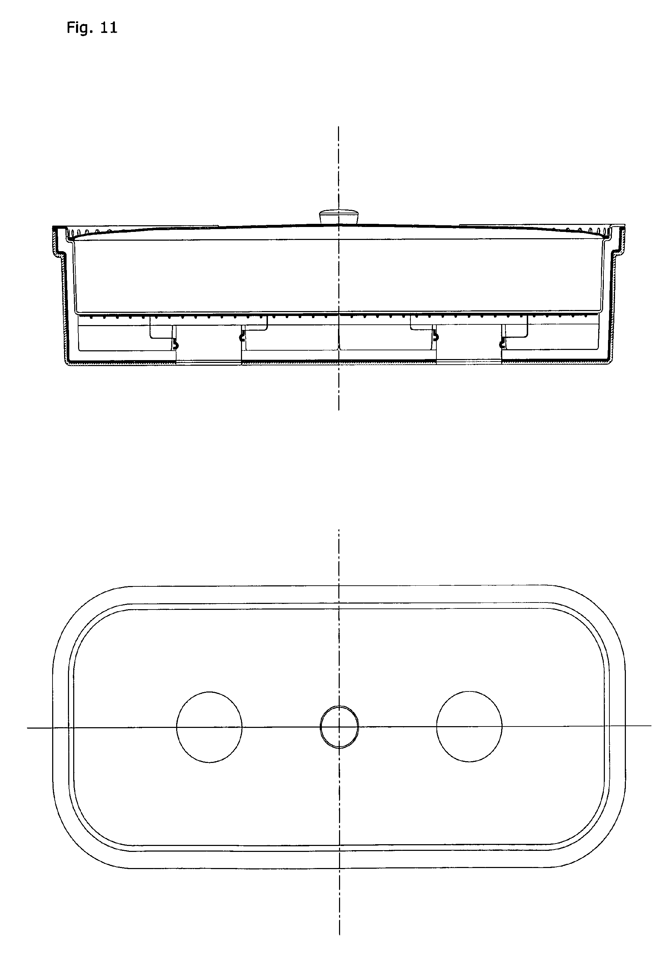

Mehrere Ausführungsbeispiele der Erfindung werden anhand der Figuren 1 bis 11 erläutert. Es zeigen:
Figur 1 Eine Arbeitsfläche mit darin versenktem beispielhaftem Verbindungselement als Seitenansicht, geschnitten dargestellt, zusammen mit schematisch dargestellten Energie- und Absaugungsanschlüssen.
Figur 2 die Anordnung wie in Figur 1, jedoch bei einer beispielhaften Betätigung durch so genanntes "Push-Push", dass heißt, das Verbindungselement ist zum Entriegeln nach unten gedrückt.
Figur 3 Anordnung wie in Figur 1, jedoch mit aktiviertem, d.h. nach oben ausgefahrenem Verbindungselement.
Figur 4 Ein beispielhaftes Kochsystem schematisch dargestellt, bestehend aus Energieversorgungseinheit, einem Verbindungselement in einer Arbeitsfläche und der Absaugungseinrichtung.
Figur 5 Anordnung wie in Figur 4, jedoch mit einer aufgesetzten beispielhaften Systemgerätschaft.
Figur 6 Eine beispielhafte Systemgerätschaft als Seitenansicht, geschnitten dargestellt.
Figur 7 Eine beispielhafte Systemgerätschaft als Seitenansicht, geschnitten dargestellt mit intern abgesenkter Heizquelle zur beschleunigten Abkühlung.
Figur 8 Eine beispielhafte zerlegbare Systemgerätschaft als Seitenansicht, geschnitten und die einzelnen Baugruppen auseinander gezogen dargestellt.
Figur 9 Zur Verdeutlichung des austauschbaren Innengefäßes: eine beispielhafte Systemgerätschaft mit zwei getrennten Kochkammern, als Seitenansicht, geschnitten dargestellt.
Figur 10 Eine beispielhafte Systemgerätschaft mit zwei getrennten Kochkammern, als Seitenansicht, geschnitten und die einzelnen Baugruppen auseinander gezogen dargestellt.
Figur 11 Eine beispielhafte größere Systemgerätschaft, welche zur verstärkten Energieversorgung und/oder für erhöhte Absaugungsleistung auf zwei Verbindungselemente gleichzeitig aufgesetzt ist.

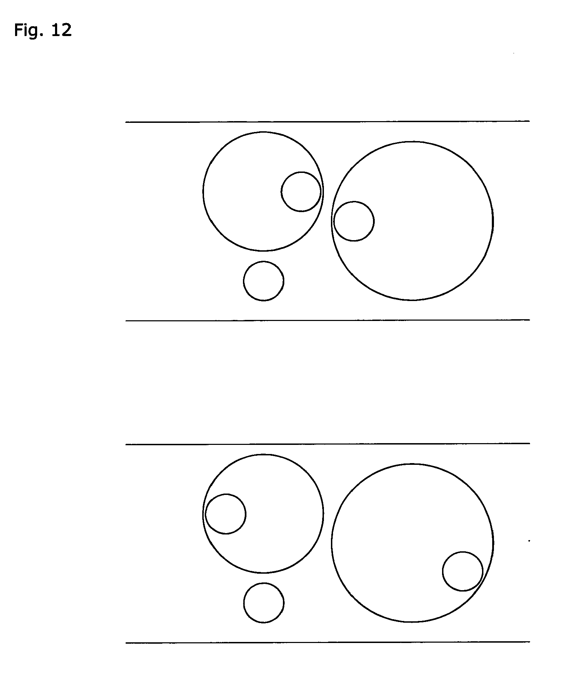

Figur 12 Eine beispielhafte Arbeitsfläche in der Draufsicht, in welche die Verbindungselemente in kreisförmigen Segmenten exzentrisch eingebaut sind.

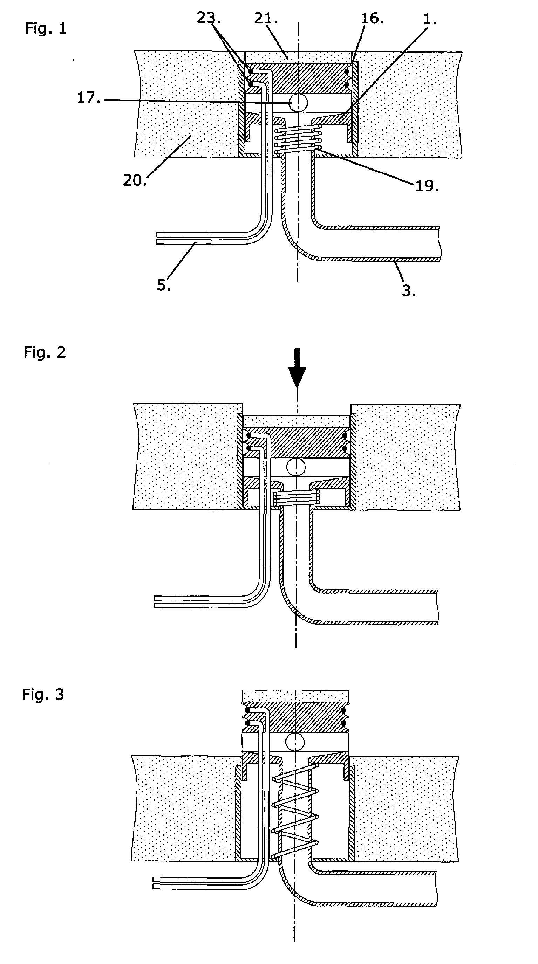

In der Figur 1 ist eine Arbeitsfläche (20) mit darin versenktem beispielhaftem Verbindungselement (1) als geschnittene Seitenansicht dargestellt. Die elektrischen Kontakte (23) am Verbindungselement werden durch Kabel (5) mit der zugehörigen Stromquelle (4) verbunden. Weiter sind der Absaugungskanal (3) und die Absaugungsöffnungen (17) im Verbindungselement dargestellt sowie die Abdichtung des Verbindungselementes gegen das Gehäuse durch einen beispielhaft eingesetzten Dichtring (16). Das Verbindungselement sitzt hier in einem optional verwendbaren zusätzlichen, in der Arbeitsfläche befestigten, Gehäuse (2). Eine wählbare Blende (21) ermöglicht die gestalterische Integration der Verbindungselemente in die Arbeitsfläche. Als Platzhalter für eine Einrichtung (19), die dazu dient, dass Verbindungselement zu bewegen, ist hier eine Feder eingezeichnet.

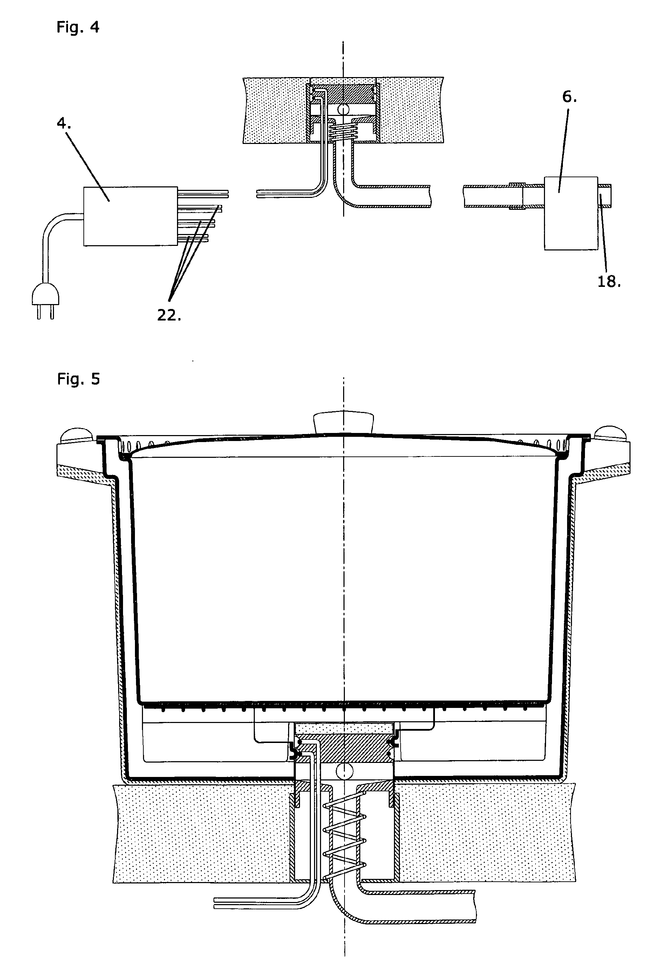

In Figur 4 ist ein beispielhaftes Kochsystem schematisch dargestellt, bestehend aus den drei Hauptbaugruppen Energieversorgungseinheit, Verbindungselemente in einer Arbeitsfläche und der Absaugungseinrichtung. Gezeigt sind an der Energiequelle (4) Anschlüsse (22) für mehrere Verbindungselemente, ein Verbindungselement, wie vorher beschrieben und das Absaugungssystem (6) für ein oder mehrere Verbindungselemente, dass folgende Baugruppen enthalten kann: Geruchsfilter, Fettabscheider, Flüssigkeitssammler und die Auslassöffnung (18) für die weitere Ableitung des abgesaugten Wrasens.

In Figur 5 wird das in Figur 4 gezeigte System mit aufgesetzter Systemgerätschaft (7), hier beispielhaft als Kochtopf ausgeführt, gezeigt.

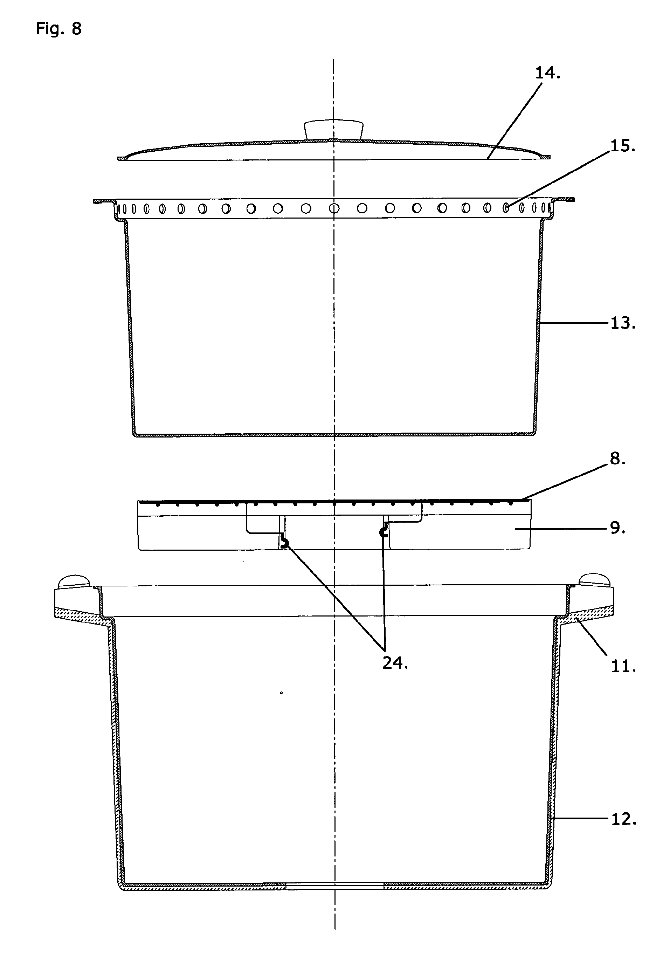

In Figur 8 wird eine beispielhafte zerlegbare Systemgerätschaft gezeigt. Als Seitenansicht, geschnitten und die einzelnen Baugruppen auseinander gezogen dargestellt. Die einzelnen Baugruppen können im einzelnen sein ein Deckel (14), ein inneres Gehäuse (13) mit Absaugungsöffnungen (15), ein Heizelement bestehend aus einer Heizquelle (8), zum Beispiel als Heizdraht ausgeführt, einem isolierenden Bereich (11) und den Kontakten (24) mit denen der Strom von den Verbindungselementen abgenommen werden kann, und einem äußeren Gehäuse (12) welches ebenfalls von einer isolierenden Schicht (11) eingehüllt sein kann.

## Patentansprüche

1. Zubereitungssystem für Speisen aufweisend:
a. eine Arbeitsfläche
b. zumindest ein Verbindungselement, das so in der Arbeitsfläche angeordnet ist, dass es von einer Arbeitsposition in eine Nichtgebrauchsposition in die Arbeitsfläche versenkt werden kann;
c. wobei das zumindest eine Verbindungselement in seiner Arbeitsposition eine Energieversorgung für eine lösbar mit dem Verbindungselement verbindbare Systemgerätschaft bereitstellt, mit der die Speisen zubereitet werden.

2. Zubereitungssystem nach Anspruch 1 wobei das Verbindungselement ferner einen Anschluss zum Absaugen von bei der Zubereitung von Speisen anfallenden Dämpfen und / oder zum Kühlen der auf dem Verbindungselement angeordneten Systemgerätschaft umfasst.

3. Zubereitungssystem nach einem der vorhergehenden Ansprüche, wobei das zumindest eine Verbindungselement so ausgebildet ist, dass die lösbare Systemgerätschaft im Betrieb um eine Mittelachse des Verbindungselements drehbar ist.

4. Zubereitungssystem nach Anspruch 3, wobei eine Drehung der Systemgerätschaft zu einer Veränderung der zugeführten Energie und / oder der Absaug- bzw. Kühlleistung führt.

5. Zubereitungssystem nach einem der vorhergehenden Ansprüche ferner aufweisend eine Steuereinheit zum Steuern und / oder automatischen Regeln der über das versenkbare Verbindungselement der Systemgerätschaft zugeführten Energie und / oder Absaugleistung.

6. Zubereitungssystem nach einem der vorhergehenden Ansprüche aufweisend eine Mehrzahl von versenkbaren Verbindungselementen.

7. Zubereitungssystem nach einem der vorhergehenden Ansprüche, mit einem ersten und einem zweiten Verbindungselement wobei der Abstand zwischen dem ersten und dem zweiten Verbindungselement in der Arbeitsfläche variiert werden kann.

8. Zubereitungssystem nach Anspruch 7, wobei zumindest das zweite Verbindungselement in einem drehbaren Teilbereich der Arbeitsfläche exzentrisch bezüglich einer Drehachse des Teilbereichs angeordnet ist.

9. Zubereitungssystem nach einem der vorhergehenden Ansprüche, wobei das zumindest eine Verbindungselement so in die Arbeitsfläche versenkbar ist, dass es in einem versenkten Zustand im Wesentlichen plan mit der Oberfläche der Arbeitsfläche abschließt.

10. Zubereitungssystem nach Anspruch 9, wobei das zumindest eine Verbindungselement auf seiner Oberseite ein Blendenelement aufweist, das aus demselben Material ausgebildet sein kann, wie der das Verbindungselement umgebende Teilbereich der Arbeitsfläche.

11. Zubereitungssystem nach einem der vorhergehenden Ansprüche, wobei das Verbindungselement so ausgebildet ist, dass es durch Drücken von oben aus der Nichtgebrauchsposition in die Arbeitsposition gebracht werden kann.

12. Zubereitungssystem nach einem der vorhergehenden Ansprüche, wobei das Verbindungselement so ausgebildet ist, dass es durch Bedienelemente gesteuert zum Einfahren aus der Arbeitsposition und / oder Ausfahren in die Arbeitsposition gebracht werden kann.

13. Systemgerätschaft für ein Zubereitungssystem nach einem der Ansprüche 1 - 12 aufweisend ein Energieverbrauchselement, insbesondere ein Heizelement, das mit dem versenkbaren Verbindungselement lösbar in Verbindung gebracht werden kann, um der Systemgerätschaft Energie zuzuführen.

14. Systemgerätschaft nach Anspruch 13 ferner aufweisend Absaugeinrichtungen zum Absaugen von bei der Zubereitung entstehenden Wrasen, wobei die Absaugeinrichtungen mit einem Anschluss des Verbindungselements verbindbar sind.

15. Systemgerätschaft nach Anspruch 13 oder 14, aufweisend Steuerungsmittel zum Steuern und / oder automatischen Regeln der über das Verbindungselement aufgenommenen Energie und / oder Absaugleistung.

16. Systemgerätschaft nach einem der Ansprüche 13 - 15, ferner aufweisend ein Außengefäß und ein im Außengefäß lösbar angeordnetes Innengefäß.

17. Systemgerätschaft nach einem der Ansprüche 13 - 16, in welcher das im Wrasen enthaltene Fett aufgefangen wird.

18. Systemgerätschaft nach Anspruch 16 wobei das Energieverbrauchselement als ein Heizelement ausgebildet ist, welches am oder im Innengefäß angebracht ist und das Heizelement am oder im Innengefäß von einer Erwärmungsposition in eine Abkühlposition bewegbar ausgebildet ist.

19. Systemgerätschaft nach einem der Ansprüche 16 - 18 in Verbindung mit Anspruch 13, wobei sich die Absaugeinrichtungen zwischen dem Innengefäß und dem Außengefäß befinden.

20. Systemgerätschaft nach einem der Ansprüche 13 - 19 ferner aufweisend einen thermisch isolierenden Bereich, insbesondere einen thermisch isolierenden Bodenbereich.

21. Systemgerätschaft nach einem der vorhergehenden Ansprüche 13 - 20, wobei die Systemgerätschaft gleichzeitig mit einer Mehrzahl von Verbindungselementen der Arbeitsfläche lösbar in Verbindung gebracht werden kann.
